Europäisches Patentamt

European Patent Office

Office européen des brevets

(19)

(11) Publication number: 0 480 521 A1

## (12) EUROPEAN PATENT APPLICATION

(21) Application number: 91202593.9

(22) Date of filing: 04.10.91

(51) Int. Cl.5: F23D 14/70, F16B 2/24

(30) Priority: 08.10.90 NL 9002180

(43) Date of publication of application:
15.04.92 Bulletin 92/16

(84) Designated Contracting States:
BE DE FR GB IT NL

(71) Applicant: Burnham Europe B.V.
Gildenstraat 15
NL-3861 RG Nijkerk(NL)

(72) Inventor: Dijkstra, Ernst
165, Strawinskystraat
NL-3822 DR Amersfoort(NL)

(74) Representative: Timmers, Cornelis Herman
Johannes et al
EXTERPATENT B.V. P.O. Box 90649
NL-2509 LP 's-Gravenhage(NL)

(54) Fixing clip for a radiant burner bar.

(57) The invention provides a fixing clip (2) for a radiant bar (16) which is fitted on a bar-shaped gas burner (14), to minimize NOx emission which is made of resilient sheet material (4) in which a hole (8) is formed which is matched to the circumferential contour of the burner, the dimension of said hole (8) being greater in a first direction (m1) than the dimension in a second direction (m2) at right angles thereto, while said sheet material being bent out V-shaped along a line parallel to said second direction, while there is in the material at least one hole (12) for the accommodation of a radiant bar (16).

_FIG. 2._

The invention relates to a fixing clip for a radiant bar fitted on a bar-shaped gas burner.

In order to reduce the NOx content of the combustion gases of a gas burner, it is known to lower the flame temperature by means of one or more heat-resistant bars placed in the region of the flames. The bars, heated by the flames, radiate heat, and the reduction in the flame temperature caused thereby results in an appreciable reduction of the NOx emission.

In practice, these bars are fixed by means of a supporting element provided with holes for passing through the bar and screwed onto one end of the burner, and a resilient U-shaped clip clamped around the burner, the free top ends of which clip being connected to each other by a connecting piece which is also provided with holes.

Each of these supporting elements consists of several parts, which considerably increases the cost of the burner.

The object of the invention is to provide a clip of the kind as described in the preamble which is very cheap to manufacture and yet permits an effective and reliable support of the radiant bars.

The clip according to the invention consists to this end of resilient sheet material in which is formed a hole which is matched to the circumferential contour of the burner a dimension of this hole being greater in a first direction than the dimension in a second direction at right angles thereto, while the sheet material is bent out V-shaped along a line parallel to said second direction, and at least one hole for the accommodation of a radiant bar is formed in the material.

In an embodiment in which the burner has a circular cross-section, the hole formed in the sheet is preferably oval-shaped.

At least one centring boss, projecting into the hole, is preferably formed in the edge boundary of the hole, while the clip can also be provided with a projecting flange containing a hole for accomodating a radiant bar.

The clip is simply slid over the burner to the desired place.

The invention is explained with reference to the drawing, in which:

Fig. 1 shows a front view of the clip according to the invention;

Fig. 2 shows a perspective view of said clip;

Fig. 3 shows a perspective view of a gas burner bearing three radiant bars held by two clips according to the invention;

Fig. 4 shows a schematic side view of a part of a burner with a clip according to the invention.

The clip according to the invention, indicated by the reference numeral 2, is made of resilient sheet material from which the annular body 4 and the flange 6 connecting thereto is punched.

The annular body 4 bounds an oval hole 8 of which the first dimension m1 is greater than the second dimension m2.

Two centring bosses 10 project from the annular body 4 into the hole 8. Their purpose will be explained in further detail below.

Three holes 12, intended for accommodating radiant bars, as will also be explained in greater detail below, are formed in the flange 6.

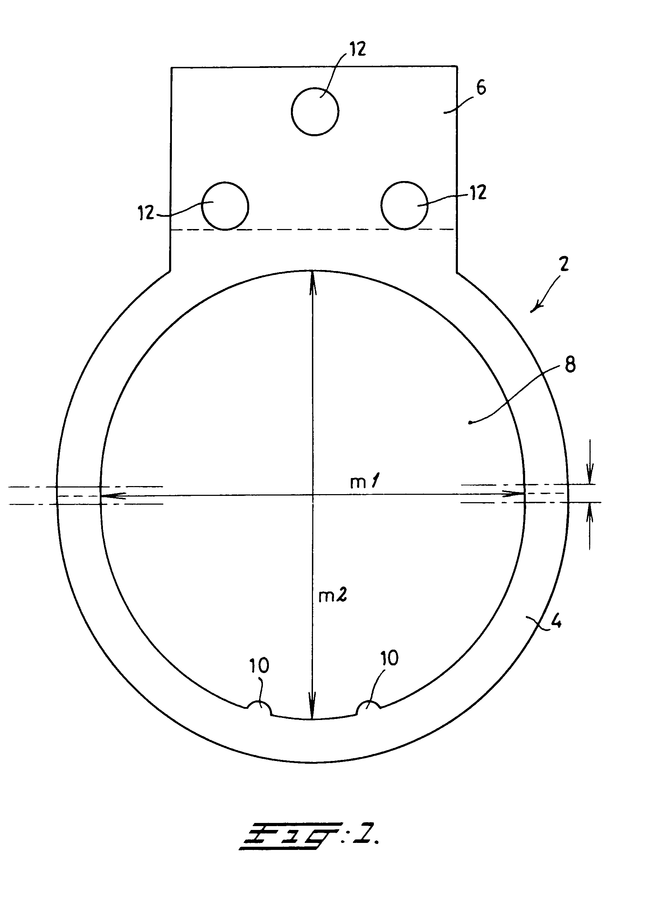

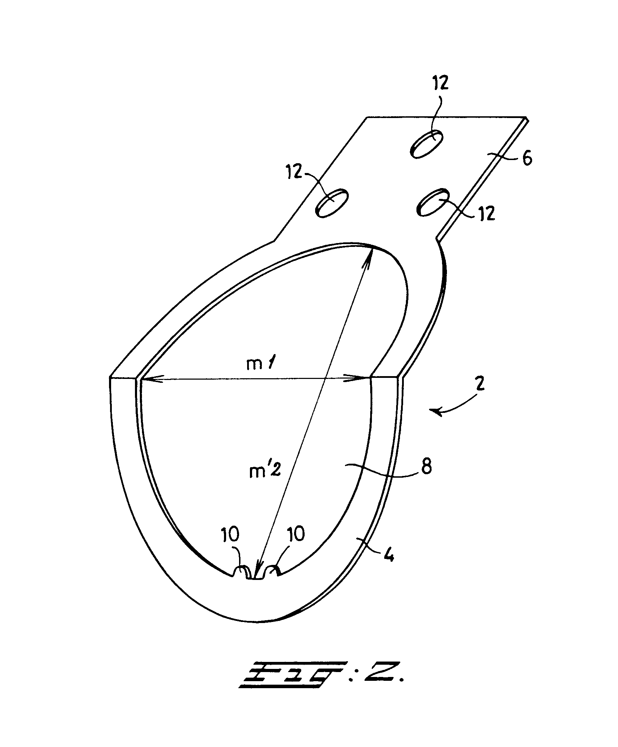

After the formation of the clip 2, the body part is bent through in a V-shape about the line m1 at right angles to the plane of drawing in Figure 1, so that the configuration according to Fig. 2 is obtained. In this situation the distance m'2 is smaller than the distance m1.

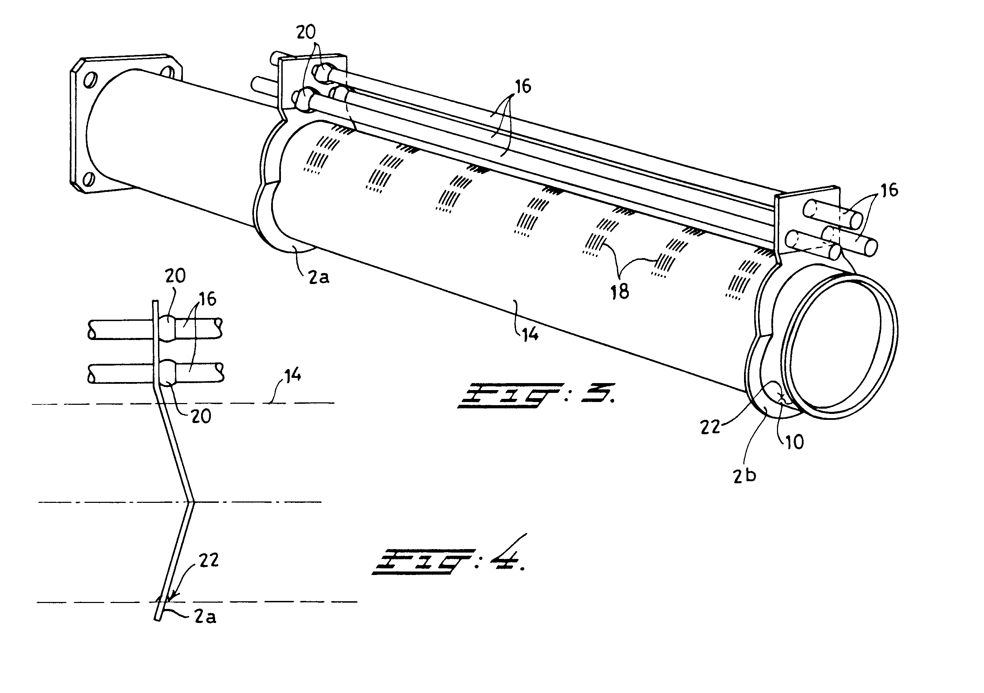

The clip is now ready for use. Figure 3 shows how two clips, indicated by 2a and 2b respectively, are fitted on the cylindrical burner 14 and carry, by means of the holes 12, the radiant bars 16 which lie above the region of the flame openings 18. These radiant bars 16 are provided with stop bosses 20; the clip 2a is first slid over the burner until it has reached the position shown in Figure 3, the three bars 18 are then inserted into the holes 12 of the flange 6 of said clip, and then the clip 2b is fitted. The bars are then reliably and securely fixed.

In order to ensure the correct position of the clips, the centring projections 10, fitting into corresponding recesses 22, are formed in the wall of the burner 14, in the manner shown in Figure 4.

## Claims

1. Fixing clip (2) for a radiant bar (16) fitted on a bar-shaped gas burner (14), **characterised in that** it is made of resilient sheet material (4) in which a hole (8) is formed which is matched to the circumferential contour of the burner, the dimension of said hole (8) being greater in a first direction (m1) than the dimension in a second direction (m2) at right angles thereto, while the sheet material is bent out V-shaped along a line parallel to said second direction, and at least one hole (12) for the accommodation of a radiant bar (16) is formed in the material.

2. Clip according to claim 1, **characterised in that** the cross-section of the burner (14) is circular, and the hole (8) formed in the sheet material is oval.

3. Clip according to claim 1 or 2, **characterised in that** at least one centring boss (10) projecting into the hole (8) is formed in the edge boundary of the hole.

4. Clip according to claims 1 - 3, **characterised by** a projecting flange (6), provided with at least one radiant bar location hole (12).

*Fig:1.*

$$\equiv \!\!\!\text{Fig}: 2.$$

Fig. 3.

Fig. 4.

European
Patent Office

EUROPEAN SEARCH
REPORT

Application Number

EP 91 20 2593

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-U-8 714 600  (VIESSMANN)<br>* page 1, claim 1 *<br>* figures 1,2 * * | 1,4 | F 23 D 14/70<br>F 16 B 2/24 |

– – – – –

|  |
|---|
| TECHNICAL FIELDS SEARCHED (Int. Cl.5) |
| F 23 D<br>F 16 B |

The present search report has been drawn up for all claims

| Place of search | Date of completion of search | Examiner |
|---|---|---|
| The Hague | 14 January 92 | PHOA Y.E. |